# EUROPEAN PATENT APPLICATION

(11) **EP 1 862 990 A1**
(43) Date of publication of application: **05.12.2007**
(21) Application number: 05820363.9
(22) Date of filing: 22.12.2005
(51) Int. Cl.: G09B 23/12, B81B 1/00, G01N 37/00

(54) **METHOD OF EXPERIMENT WITH APPARATUS FOR EVALUATING SCIENTIFIC PHENOMENON AND APPARATUS FOR EVALUATING SCIENTIFIC PHENOMENON**

(30) Priority: 23.03.2005 JP 2005084564
(71) Applicant: FUJIFILM Corporation, Minato-ku Tokyo 106-8620 (JP)
(72) Inventor: UEYAMA, Tomohide c/o Fujifilm Corporation, Kanagawa 250-0193 (JP); ICHIKAWA, Yasunori c/o Fujifilm Corporation, Kanagawa 250-0193 (JP)
(74) Representative: HOFFMANN EITLE
(86) International application number: PCT/JP2005/023615
(87) International publication number: WO 2006/100812

(57) **Abstract**

An apparatus for evaluating scientific phenomena by feeding liquid to a minute channel, which is inexpensive, imposes little environmental load and enables advanced technology to be easily enjoyed and can eliminate experimental failures due to the clogging of the minute channel with a bubble, is provided. Before starting the experiment with the experimental liquid, the preparatory step of removing air in the minute channel by vigorously injecting inert dummy liquid which does not react with the experimental liquid into the minute channel and thereby filling the minute channel with the dummy liquid is carried out. If one round of preparatory step proves insufficient to wholly remove the air in the minute channel and a bubble is found in the dummy liquid, the step will be repeated until no bubble is found any longer in the dummy liquid. Next, the experiment is started by supplying the experimental liquid to inlet side liquid reservoirs and causing liquid feeding device to let the dummy liquid filling the minute channel flow to outlet side liquid reservoirs.

## Description

### Technical Field

The present invention relates to an experimental method for a scientific phenomenon evaluating apparatus and a scientific phenomenon evaluating apparatus, and more particularly to an inexpensive apparatus for evaluating scientific phenomena with little environmental load and suitable for conveniently enjoying advanced technology, and an experimental method for making experiments with that apparatus free from failures.

### Background Art

As scientific experiment materials for classroom use, which are examples of scientific phenomenon evaluating apparatus, items of various configurations have been proposed so far (see Patent Document 1).

Patent Document 1, for instance, discloses a science teaching aid which enables natural phenomena arising from temperature variations of water to be observed by refrigerating or freezing water vapor in the atmosphere or water or water vapor held in a container, and this item is small, simply structured and claimed to permit faithful reproduction of various natural phenomena arising from temperature variations of water.

Chemical experimental apparatuses for educational use include experiment kits marketed by Gakushu Kenkyu Sha and others including Kagaku to Gakushu: Jikken Kitto Shirihzu (Science and Learning: Experimental Kit Series) and Otona no Kagaku Chikyu Kankyo Bunseki Kitto (Science for Grownups: Kit for Global Environmental Analysis). Such a kit is available at a relatively low price ranging from a few hundred yen to 3,000 yen, and is well accepted as an experimental kit which gives dreams to children and enables its users to enjoy experiments.

However, as a conventional scientific phenomenon evaluating apparatus of this kind, items like what is described in Patent Document 1 are relatively complex in configuration, difficult to make available at a low price and therefore unsuitable for every pupil of a class to buy.

On the other hand, many of experimental kits relatively simple in configuration, though comparatively low-priced and therefore suitable for every pupil of a class to buy, are inadequate in the accuracy of finish and consume correspondingly larger volumes of chemicals and other materials. Therefore, when used by every pupil of a class, they impose heavy environmental loads in terms of waste liquid disposal and other respects, which is undesirable.

Moreover, what can be experienced with conventional experimental kits are classical methods of scientific experimentation, and devices which permit easy enjoyment of advanced technology are strictly limited in availability.

In view of these circumstances, the present inventors consider what comprises a substrate having a long groove of a minute sectional area formed in the surface of a planar body and a covering plate which is arranged in tight contact with the surface of this substrate and forms a minute channel in the substrate by covering the long groove and is so configured as to make a scientific phenomenon in the channel visually recognizable to be a promising scientific phenomenon evaluating apparatus which is inexpensive, imposes little environmental load and suitable for easily enjoying advanced technology.

Patent Document 1: Japanese Patent Application Laid-Open No. 2000-242162

### Disclosure of the Invention

However, an apparatus for evaluating scientific phenomena by feeding liquid to such a minute channel involves a problem that, when liquid is fed, a bubble may clog the minute channel on the way. Clogging with a bubble entails a problem that it would disturb the liquid that is fed, make it difficult to achieve a constant state and thereby make it impossible to correctly evaluate the scientific phenomenon. Furthermore, a failure in experiment due to the clogging of the minute channel with a bubble invites the waste of time taken to make the experiment and the liquid and other materials used for the experiment. Especially where a test liquid having a high surface tension is to be let flow in the minute channel, a bubble is more likely to clog the minute channel and the clogging bubble would be extremely difficult to remove.

Thus, an apparatus which is to evaluate a scientific phenomenon by letting liquid flow in a minute channel often suffers clogging with a bubble when in use, and it is desired to solve this problem by a simple method. Especially where a scientific experiment is to be made by low-aged pupils, such as elementary school students, it is extremely difficult to feed liquid without letting a bubble occur in the minute channel, and it is extremely important for a scientific phenomenon evaluating apparatus of this kind to enable a scientific experiment to be carried out without letting a bubble occur whoever practices the experiment.

An object of the present invention, attempted in view of these circumstances, is to provide an experimental method for an apparatus for evaluating scientific phenomena by feeding liquid to a minute channel, which is inexpensive, imposes little environmental load and suitable for easily enjoying advanced technology and can eliminate experimental failures due to the clogging of the minute channel with a bubble, and a scientific phenomenon evaluating apparatus.

In order to achieve the object stated above, in a first mode for implementing the invention, there is provided an experimental method for a scientific phenomenon evaluating apparatus wherein communication is established between two or more liquid reservoirs constituting the inlet side and the outlet side by a minute channel of not more than 1 mm² in sectional area, the experimental method for the scientific phenomenon evaluating apparatus comprising at least one preparatory step of removing air in the minute channel in advance by letting inert dummy liquid which does not react with the experimental liquid used for the experiment flow into the minute channel and filling the channel therewith; and an experimental step of feeding the minute channel with the experimental liquid by supplying the experimental liquid to the inlet side liquid reservoirs and causing liquid feeding device to let the dummy liquid filling the minute channel flow to the outlet side liquid reservoirs.

In the first mode for implementation, in order that a failure-free reliable experiment can be made, before starting the experiment with the experimental liquid, the preparatory step of removing air in the minute channel by vigorously injecting inert dummy liquid which does not react with the experimental liquid, for instance water, into the minute channel and thereby filling the minute channel with the dummy liquid is carried out. If one round of preparatory step proves insufficient to wholly remove the air in the minute channel and a bubble is found in the dummy liquid, the step will be repeated until no bubble is found any longer in the liquid. Next, the experiment is started by supplying the experimental liquid to the inlet side liquid reservoirs and causing the liquid feeding device to let the dummy liquid filling the minute channel flow to the outlet side liquid reservoirs thereby to feed the experimental liquid into the minute channel. As this causes the experimental liquid supplied to the inlet side liquid reservoirs to follow the flow of the dummy liquid filling the minute channel in advance toward the outlet side and to be fed into the minute channel, no air finds its way into the experimental liquid during the experiment, and a failure of experiment due to clogging with a bubble can be prevented. Furthermore, since water can be used as the dummy liquid in many cases as suggested above, any increase in cost attributable to the experimental method according to the invention can be restrained to a negligible extent.

In order to achieve the object stated above, in a second mode for implementing the invention, there is provided an experimental method for a scientific phenomenon evaluating apparatus wherein communication is established between two or more liquid reservoirs constituting the inlet side and the outlet side by a minute channel of not more than 1 mm² in sectional area, the experimental method using the scientific phenomenon evaluating apparatus comprising at least one preparatory step of removing air in the minute channel in advance by letting an experimental liquid to be used for the experiment flow into the minute channel and filling the channel therewith; and an experimental step of feeding the minute channel with the supplied experimental liquid by further supplying the experimental liquid to the inlet side liquid reservoirs and causing transfer device to let the experimental liquid flow filling said minute channel to the outlet side liquid reservoirs.

In the second mode for implementation, as the experimental liquid itself is used as the dummy liquid for removing the air in the minute channel, the use of the experimental liquid is more wasteful than where a dummy liquid such as water is used, but since only one round of the preparatory step is usually sufficient, a much greater saving in the consumption of the experimental liquid can be achieved, compared with possible repeated failures of the experiment due to the clogging of the minute channel with a bubble.

In a third mode for implementation, the method in the first mode or the second mode is characterized in that it further provided, a sucking step of reducing the liquid level in the inlet side liquid reservoirs by sucking the liquid in the outlet side liquid reservoirs with a tapered sucking tool between the preparatory step and the experimental step.

By carrying out the preparatory step, the dummy liquid also accumulates in the inlet side liquid reservoirs from which the experimental liquid is supplied, and therefore the liquid level in the inlet side liquid reservoirs has to be reduced in order to supply the experimental liquid to the inlet side liquid reservoirs. In this case, the liquid level in the inlet side liquid reservoirs has to be reduced with the minute channel remaining filled with the dummy liquid.

In the third mode for implementation, as the sucking force of sucking the liquid from the outlet side liquid reservoirs with the sucking tool causes the liquid to flow to the outlet side with the minute channel remaining filled with the liquid therein, the liquid level in the inlet side liquid reservoirs falls. Since this suction can be achieved only little by little by causing the tapered sucking tool to suck the liquid, the liquid in the minute channel is not sucked. Therefore, no air flows into the minute channel. In this case, even if air finds its way into the liquid when the sucking tool is soaked in the liquid; this will happen in the outlet side liquid reservoirs and, when the experiment is started by feeding the experimental liquid into the minute channel, any bubble would be discharged toward the outlet side, giving rise to no problem. As the sucking tool, a paper string formed by twisting a sheet of tissue paper and tapering the tip can be suitably used.

In order to achieve the object stated above, in a fourth mode for implementing the invention, there is provided a scientific phenomenon evaluating apparatus comprising a substrate having long grooves of a sectional area of not more than 1 mm² formed in the surface of a planar body; and a covering plate which is arranged in tight contact with the surface of the substrate and forms minute channels in the substrate by covering the long grooves, characterized in that one end of each of a plurality of the channels joins with those of other channels at one confluent point, the other end of each of the plurality of the channels communicates with liquid reservoirs each having a capacity of 5 to 5000 mm³, a scientific phenomenon in the channels is made visually recognizable, and the plurality of the channels are filled with inert dummy liquid which does not react with the experimental liquid used for the experiment in a state of being free from bubbles.

In the fourth mode for implementation, a plurality of minute channels of a sectional area of not more than 1 mm² are formed in this evaluating apparatus, one end of each of these channels joins with those of other channels at one confluent point, and the plurality of the channels are filled with inert dummy liquid which does not react with the experimental liquid used for the experiment in a state of being free from bubbles. Therefore, when the experimental liquid is let flow into the minute channel to carry out an experiment with the experimental liquid, the dummy liquid filling the minute channel in advance is driven out by the experimental liquid. This enables a scientific phenomenon, such as the diffusion of molecules, to be qualitatively observed without suffering a failure of experiment due to the clogging of the minute channel with a bubble. Especially where a scientific experiment is to be made by low-aged pupils, such as elementary school students, it is extremely difficult to feed liquid without letting a bubble occur in the minute channel. However, if this scientific phenomenon evaluating apparatus whose minute channel is free from bubbles in advance is used, even elementary school students can make an experiment without suffering a failure.

Also, sufficient accuracy can be achieved to experience advanced technology-related phenomena occurring in this minute channel, such as the diffusion of liquid, heat transfer by liquid, mixing of liquids and chemical reactions of liquids (e.g. acid-alkali reactions and hydrolytic reactions), without consuming large volumes of chemicals and accordingly with little environmental load. Therefore, such a scientific phenomenon evaluating apparatus is suitable as a teaching aid for scientific experiments. Incidentally, as the liquid feeding method for letting the experimental liquid flow to the minute channel, a positive pressure or negative pressure using a pump or the like can be applied.

A preferable sectional area for the minute channel is not more than 1 mm², more preferably 0.0025 to 0.64 mm² and still more preferably 0.01 to 0.25 mm².

In spite of the wording "liquid reservoirs", these elements are usually hollow, and a chemical or the like is supplied to them when this evaluating apparatus is to be operated.

In order to achieve the object stated above, in a fifth mode for implementing the invention, there is provided a scientific phenomenon evaluating apparatus comprising a substrate having long grooves of a sectional area of not more than 1 mm² formed in the surface of a planar body; and a covering plate which is arranged in tight contact with the surface of the substrate and forms minute channels in the substrate by covering the long grooves, characterized in that one end of each of a first channel and a second channel which are two of the channels of substantially the same length joins with the other at one confluent point, the other end of the first channel communicates with a first liquid reservoir having a capacity of 5 to 5000 mm³, the other end of the second channel communicates with a second liquid reservoir having a capacity of 5 to 5000 mm³, one end of a third channel which is one of the channels communicates with the confluent point and the other end of the third channel communicates with a third liquid reservoir having a capacity of 5 to 5000 mm³, a scientific phenomenon in the channels is made visually recognizable, and the plurality of the channels are filled with inert dummy liquid which does not react with the experimental liquid used for the experiment in a state of being free from bubbles.

In the fifth mode for implementation, three minute channels of not more than 1 mm² in sectional area are formed in this evaluating apparatus, one end of each of which joins with the others at one confluent point, and the plurality of channels are filled with inert dummy liquid which does not react with the experimental liquid used for the experiment in a state of being free from bubbles. This enables a scientific phenomenon, such as the diffusion of molecules, to be qualitatively observed without suffering a failure of experiment due to the clogging of the minute channel with a bubble. Also, sufficient accuracy can be achieved to experience advanced technology without consuming large volumes of chemicals and accordingly with little environmental load. Therefore, such a scientific phenomenon evaluating apparatus is suitable as a teaching aid for scientific experiments.

Incidentally, the scientific phenomena here include various chemical phenomena and physical phenomena of liquids occurring in the minute channel, such as the diffusion of liquid, heat transfer by liquid, mixing of liquids and chemical reactions of liquids (e.g. acid-alkali reactions and hydrolytic reactions).

In a sixth mode for implementation, the apparatus in the fourth mode or the fifth mode is characterized in that it is sold in a state in which the ports of the plurality of liquid reservoirs are sealed with detachable plugs and the channels are filled with the dummy liquid.

Selling the scientific phenomenon evaluating apparatus in such a state in which the ports of the plurality of liquid reservoirs are sealed with detachable plugs and the channels are filled with the dummy liquid relieves the experimenting person who buys it of the need to deaerate the channels in advance of the experiment. This frees the experimenting persons, even if they are low-aged persons, such as elementary school students, from the risk of failing in the experiment on account of the clogging of the channels with any bubble.

In a seventh mode for implementation, the apparatus in the sixth mode is characterized in that the plugs are fixed to the covering plate with tapes.

Fixing the plugs which seal the ports of the liquid reservoirs to the covering plate with tapes in this way can prevent the plugs from coming off on the way of sale and thereby letting the dummy liquid leak out.

In an eighth mode for implementation, the apparatus in the sixth mode is characterized in that the plugs and the ports of the liquid reservoirs are fixed to each other by screwing structures.

Fixing the plugs which seal the ports of the liquid reservoirs to the ports of the liquid reservoirs with screwing structures in this way can prevent the plugs from coming off on the way of sale and thereby letting the dummy liquid leak out.

In a ninth mode for implementation, the apparatus in any of the sixth mode through the eighth mode is characterized in that the dummy liquid is any of pure water, ethanol and a mixture of ethanol and pure water having gone through de-bubbling in advance.

Essential requirements for the dummy liquid include the absence of bubbles, inertness with the experimental liquid, freedom from decaying on the way from the point of sale to the use, and ready replaceability with the experimental liquid, and any of pure water, ethanol and a mixture of ethanol and pure water having gone through de-bubbling in advance satisfies these requirements. Incidentally, it is even more advisable to use sterilized pure water or ethanol.

As hitherto described, the invention makes it possible to easily enjoy advanced technology inexpensively and with little environmental load and to eliminate experimental failures due to the clogging of the minute channel with a bubble.

### Brief Description of the Drawings

Figure 1 is a plan illustrating the hardware configuration for use in an experimental method for the scientific phenomenon evaluating apparatus according to the present invention;
Figure 2 shows a partially enlarged section of Figure 1;
Figure 3 shows a partially enlarged section of Figure 1;
Figure 4(a) is a section showing a preparatory step in the procedure of the experimental method according to the invention; Figure 4(b) is a plan showing the preparatory step in the procedure of the experimental method according to the invention; and Figure 4(c) is another section showing the preparatory step in the procedure of the experimental method according to the invention;
Figure 5(a) is a section showing a suction step in the procedure of the experimental method according to the invention; Figure 5(b) is a plan showing the suction step in the procedure of the experimental method according to the invention; and Figure 5(c) is another section showing the suction step in the procedure of the experimental method according to the invention;
Figures 6 (a) through 6(d) are sections showing an experimental step in the procedure of the experimental method according to the invention;
Figure 7 is a plan illustrating an example of a scientific phenomenon evaluating apparatus having multiple channels;
Figures 8 (a) through 8(c) illustrate the manner of selling a scientific experiment material, which is an example of scientific phenomenon evaluating apparatus according to the invention; and
Figures 9(a) and 9(b) illustrate a case in which a plug and the port of a liquid reservoir are fixed with a screwing structure in the manner of selling the scientific experiment material, which is an example of scientific phenomenon evaluating apparatus according to the invention.

### Description of Symbols

10 ... scientific experiment material, 12 ... substrate, 14, 16, 20 ... long grooves, 14A ... first channel, 16A ... second channel, 18 ... confluent point, 20A ... third channel, 22 ... covering plate, 24 ... first liquid reservoir, 26 ... second liquid reservoir, 28 ... third liquid reservoir, 32 ... pipette for experimental liquid, 34 ... experimental liquid, 35 ... dummy liquid, 36 ... tape, 37 ... twisted paper string, 38 ... finger, 60 ... plug, 61 ... screwing structure, 62 ... tape

### Best Mode for Carrying Out the Invention

An experimental method for a scientific phenomenon evaluating apparatus and scientific phenomenon evaluating apparatus in preferable modes for carrying out the present invention will be described below with reference to the accompanying drawings.

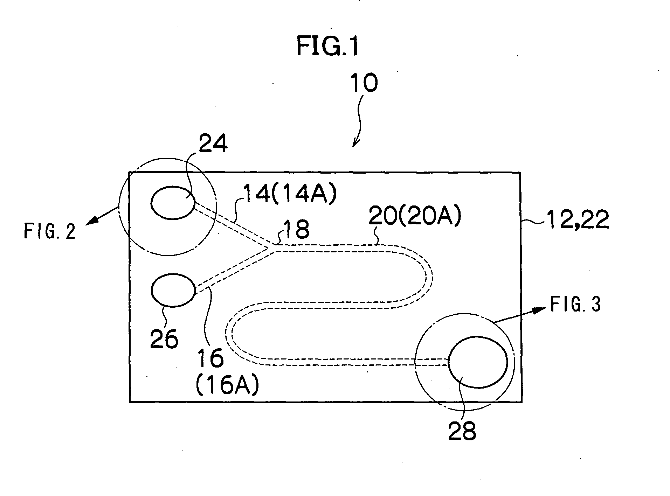

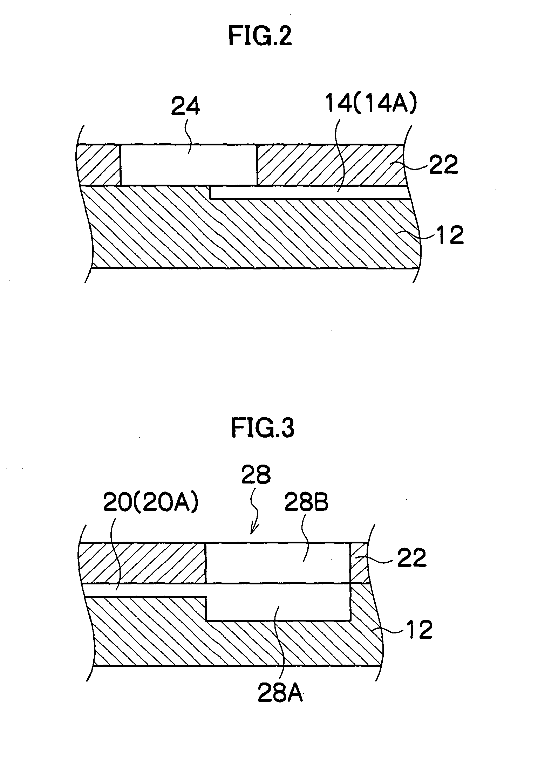

Figure 1 is a plan illustrating a configuration of a scientific experiment material 10, which is an apparatus for use in an experimental method for a scientific phenomenon evaluating apparatus according to the present invention. Figure 2 and Figure 3 show partially enlarged sections of Figure 1, Figure 2 showing a first liquid reservoir 24 (encircled by dotted lines in the upper left part of Figure 1) and Figure 3 showing a third liquid reservoir 28 (encircled by dotted lines in the lower right part of Figure 1).

Thus, the scientific experiment material 10 comprises a substrate 12 having long grooves (14, 16 and 20) of a sectional area of not more than 1 mm² formed in the surface of a planar body and a transparent covering plate 22 which is arranged in tight contact with the surface of the substrate 12 and forms minute channels (14A, 16A and 20A) in the substrate 12 by covering the long grooves.

The minute channels (14A, 16A and 20A) formed by the long grooves (14, 16 and 20) comprise a first channel 14A and a second channel 16A of substantially the same length which join each other at one confluent point 18, and a third channel 20A which further joins with these first channel 14A and second channel 16A at the confluent point 18.

The other end of the first channel 14A communicates with a first liquid reservoir 24, which is a columnar hollow formed in the covering plate 22, the other end of the second channel 16A communicates with a second liquid reservoir 26, which is a columnar hollow formed in the covering plate 22, and the other end of the third channel 20A communicates with a third liquid reservoir 28 consisting of a columnar hollow 28A formed in the substrate 12 and a columnar hollow 28B formed in the same position in the covering plate 22.

It is preferable for the capacity of the first liquid reservoir 24 and the second liquid reservoir 26 to be 5 to 5000 mm³ and that of the third liquid reservoir 28 to be 10 to 10000 mm³. Such levels of capacity facilitate control of phenomena taking place in the micro-channels.

The planar size of the substrate 12 and the covering plate 22, though not limited in particular, may be a portable size, 80 x 50 mm for instance, in view of the nature of the scientific experiment material 10 which requires in-school use. The thicknesses of the substrate 12 and the covering plate 22, though not limited in particular either, may be about 5 nm each for instance, in view of the strength, economic efficiency and other relevant aspects.

As the material of the substrate 12, though not limited in particular, to facilitate a production method described below, a resin material; more specifically poly-dimethyl sulfoxide (PDMS), poly-methyl methacrylate (PMMA), polyvinyl chloride (PVC), UV cured resin or polycarbonate (PC) can be preferably used.

It is preferable for the sectional area of the long grooves (14, 16 and 20) formed in the surface of the substrate 12 to be not more than 1 mm², more preferably 0.0025 to 0.64 mm² and still more preferably 0.01 to 0.25 mm² as stated above. One of various sectional shapes can be chosen for these long grooves (14, 16 and 20), such as a rectangular (square or oblong), trapezoidal, V-patterned or semicircular shape, though not limited in particular.

It is preferable for the material of the covering plate 22, though not limited in particular, to be transparent in view of the need to make scientific phenomena in the minute channels visually recognizable. One of various resin plates is usable for this purpose, more specifically one of poly-dimethyl sulfoxide (PDMS), poly-methyl methacrylate (PMMA), polyvinyl chloride (PVC), UV cured resin and polycarbonate (PC), or various resin films more specifically polyethylene terephthalate (PET), polyethylene naphthalate (PEN), triacetyl cellulose (TAC) and various glasses (including soda lime glass and borosilicate glass).

Though it is usual for this covering plate 22 to be a flat plate of which both the front surface and the rear surface are flat, it is also possible to for its front surface accommodating the minute channels (14A, 16A and 20A) like a convex lens to make possible observation in an enlarged state.

To add, a configuration in which the covering plate 22 is opaque and the substrate 12 is transparent can be used as well.

It is preferable for sufficient flatness of the front surface of the substrate 12 (the surface in which the long grooves are formed) and the rear face of the covering plate 22 (the surface which comes into tight contact with the substrate 12) to be secured with a view to facilitating the formation of the minute channels (14A, 16A and 20A) and preventing liquid leaks among other considerations.

Next, the method of forming the substrate 12 will be described. First, a reverse template on whose front surface a reversed shape of the long grooves (14, 16 and 20) in the substrate 12 is formed is prepared. It is necessary also to form a reversed shape of the columnar hollow 28A in the surface of this reverse template. One of various known machining methods can be used to fabricate the reverse template, including mechanical working with a machining center or the like, electrospark machining, ultrasonic machining and photoetching.

Next, a parting agent is applied to the surface of this reverse template. As this parting agent, a suitable one can be used according to the type of resin material, the machining conditions (including the temperature) and so forth of the substrate 12.

Then, a resin material is applied to the surface of the reverse template and hardened. Where the resin material is a UV cured resin for instance, it is irradiated with ultraviolet rays to be hardened. Where it is a thermoplastic resin such as polyvinyl chloride (PVC), the resin material is placed against the surface of the reverse template, and subjected to thermal transfer molding with a hot press machine.

The hardened resin is then peeled off the reverse template.

This method enables the long grooves to be formed accurately and at low cost, resulting in a cost saving in the manufacturing of the evaluating apparatus.

Next, the experimental method for the scientific experiment material 10 according to the invention will be described.

First, as the scientific experiment material 10, the following members numbered 1) through 12) need to be made available as a set.
1) Reverse template
2) Resin material for the substrate 12
3) Molding flask for the formation of the substrate 12
   (To be used as the molding flask when the resin is poured to form the substrate 12.)
4) Covering plate 22
5) Pipette for experimental liquid
   (To be used for supplying experimental liquids (reagents) to the first liquid reservoir 24 and the second liquid reservoir 26 as required according to the purpose of the test; either a pipette may be provided for exclusive use with each reagent or only one for all reagents may be shared among all the liquids, washed after each time of use.)
6) Tape for sealing the inlets and the outlets of experimental liquid
   (Serves as a lid for the first liquid reservoir 24 and the second liquid reservoir 26 which are supply holes for experimental liquid. It is intended to lid the first liquid reservoir 24 and the second liquid reservoir 26 after experimental liquid is supplied to them with a pipette.)
7) Needle
   (Intended for boring holes in the tape as required, when experimental liquid is to be supplied, to feed as much air as the variation in the quantity of liquid, resulting from the transfer to or from the first liquid reservoir 24 and the second liquid reservoir 26, to these reservoirs.)
8) Casing
   (When this experimental set has been assembled, this casing is fitted to prevent liquid from between the covering plate 22 and the substrate 12 or to prevent the covering plate 22 or the like from being damaged among other purposes. It is also possible to fit to this casing various functions matching the purpose of the experiment, such as a magnifying glass to facilitate observation of the minute channels (14A, 16A and 20A).)
9) Liquid feeding device
   (When heat is applied to the first liquid reservoir 24 and the second liquid reservoir 26 (by touching the tape with a finger tip to heat them with the bodily temperature) in a state in which the first liquid reservoir 24 and the second liquid reservoir 26 lidded with the tape, the volume of the liquid and/or the gas in the first liquid reservoir 24 and the second liquid reservoir 26 expands. The liquid feeding method makes use of this phenomenon.
   Available methods include one by which pressure is applied to the first liquid reservoir 24 and the second liquid reservoir 26 by making use of the pumping principle and the liquid inside is thereby fed out.)
10) Experimental liquids for testing (reagents)
   (Necessary chemicals suitable as test reagents for carrying out intended scientific experiments are supplied, contained in reagent containers. The experimental liquids include, for instance, colored liquids typically containing pigments, dyes or coloring matters and transparent liquids such as water.)
11) Experiment brochure
   (A brochure of commentaries on events that can be learned with this set, including the purpose of the experiment, explanation of the events and possible applications, is appended as required.)
12) Experimental method manual
   Incidentally, though this set is designed to have each pupil make the substrate 12 for himself or herself, if this making of the substrate 12 is dispensed with, a finished substrate 12 may be included in the set in place of 1) through 3).

The experimental method according to the invention using the scientific experiment material 10 described above comprises three steps including a preparatory step, a suction step and an experimental step.

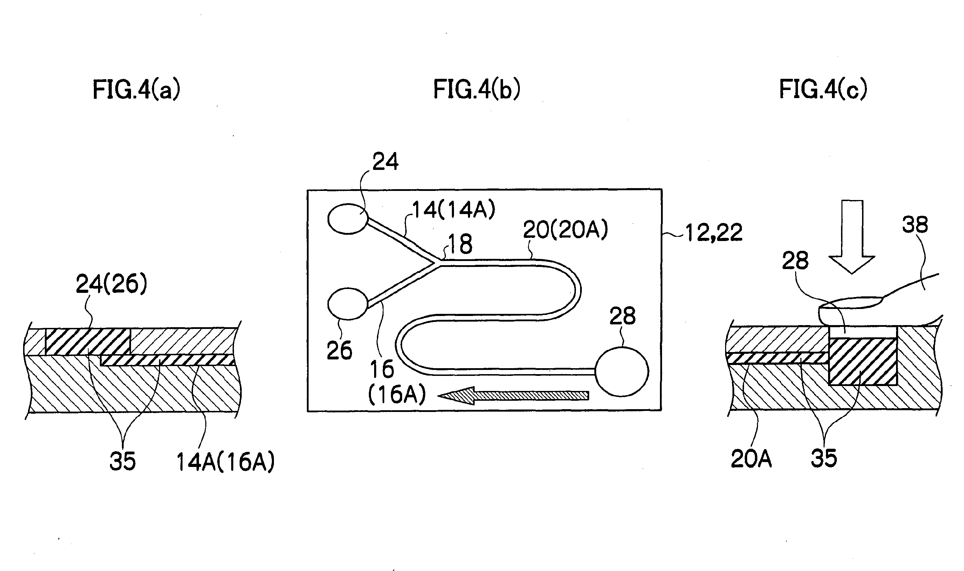

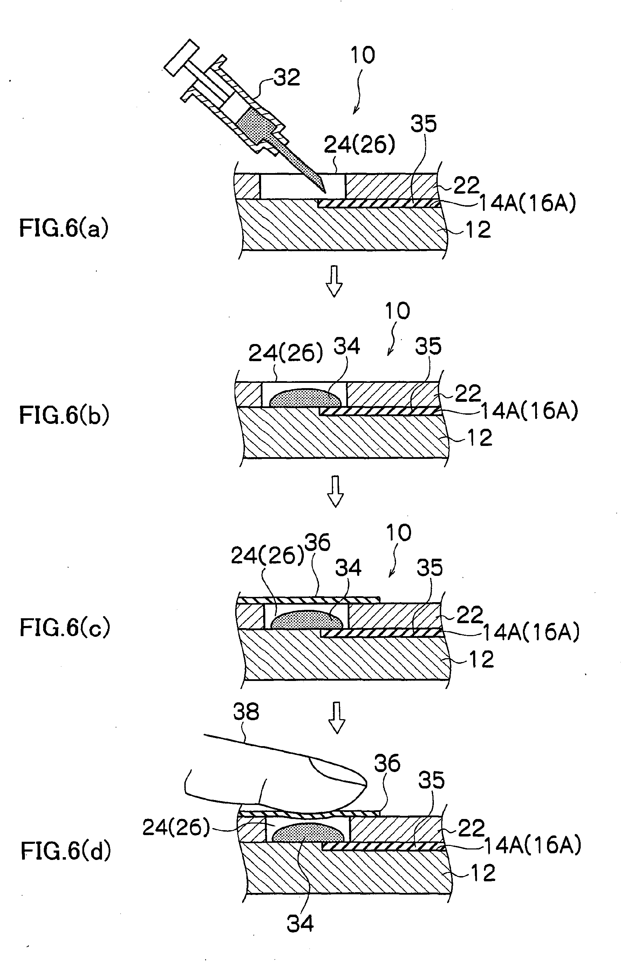

At the preparatory step, as shown in Figures 4, an operation to remove air in the minute channels (14A, 16A and 20A) in advance by filling the minute channels (14A, 16A and 20A) with inert dummy liquid 35 which does not react with experimental liquid 34 to be used in the experiment (see Figures 6) is done at least once. Thus, the dummy liquid 35 is vigorously inject into the inlet side first and second liquid reservoirs 24 and 26 as shown in Figure 4(b) (see the arrow) and the insides of the minute channels (14A, 16A and 20A) are filled with the dummy liquid 35 (Figures 4(a) and 4(c)) by supplying the dummy liquid 35 (e.g. water), which is inert and phase-soluble with the experimental liquid 34 to be used in the experiment (e.g. a dye) into the outlet side third liquid reservoir 28 which is larger in bore and heavily pressing with a finger 38 from above the third liquid reservoir 28 as shown in as shown in Figure 4(c). Whereas this causes the air in the minute channels (14A, 16A and 20A) to be removed, if any bubble is found in the dummy liquid 35 that has filled them, it means that they have not yet been completely deaerated; therefore, the preparatory step is repeated until bubbles are completely eliminated. In this way, the minute channels (14A, 16A and 20A) can be completely cleared of air. Further, if the insides of the minute channels (14A, 16A and 20A) are filled with the dummy liquid 35 before feeding the experimental liquid 34 to the minute channels (14A, 16A and 20A), the wettability of the wall faces of the minute channels (14A, 16A and 20A) will be improved, and accordingly any bubble that has inadvertently found its way into the experimental liquid during the experiment would be obstructed from clogging the channels.

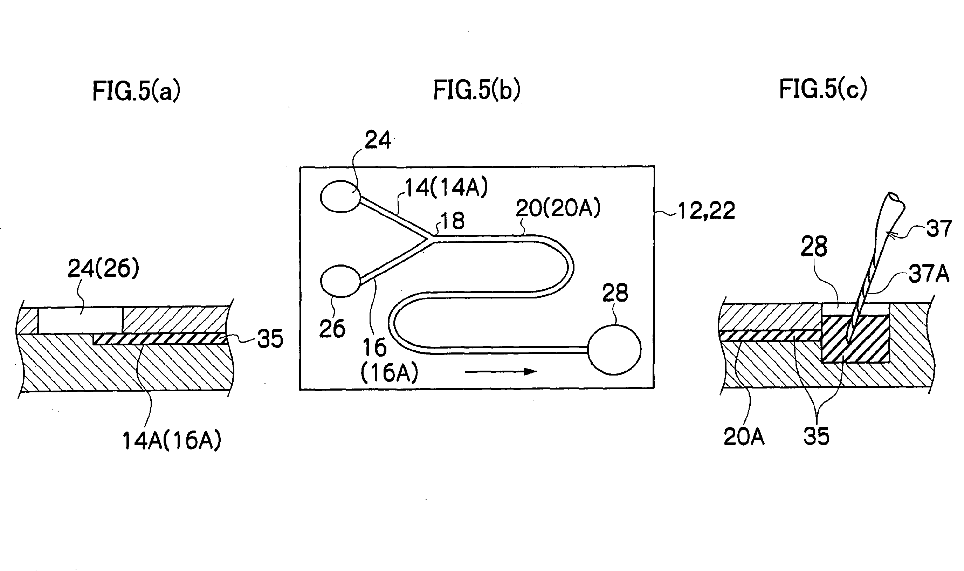

Next, the suction step is carried out. This suction step is done because the dummy liquid 35 also accumulates in the inlet side first and second liquid reservoirs 24 and 26 from which the experimental liquid 34 is supplied, and therefore it is necessary to bring down the liquid levels in the first and second liquid reservoirs 24 and 26 to enable the experimental liquid 34 to be supplied. In this case, the liquid levels in the first and second liquid reservoirs 24 and 26 have to be brought down with the dummy liquid 35 kept filling the minute channels (14A, 16A and 20A), namely to prevent air from finding its way into the minute channels (14A, 16A and 20A). For this reason, at the suction step, the dummy liquid 35 is sucked very little by little with a twisted paper string by soaking the thinly twisted tip 37A of the twisted paper string 37 in the outlet side third liquid reservoir 28 while taking care not to let it come into touch with the channel 20A as shown in Figure 5(c). As this ensures that the sucking force of the twisted paper string 37 causes the dummy liquid 35 to flow toward the outlet side (see the arrow) while continuing to fill the minute channels (14A, 16A and 20A) as shown in Figure 5(b), the liquid level in the inlet side first and second liquid reservoirs 24 and 26 can be brought down as shown in Figure 5(a). Should any air find its way into the dummy liquid 35 during the sucking operation, there would arise no problem since it would happen in the outlet side liquid reservoir 28 and, when the experiment is started by feeding the experimental liquid 34 into the minute channels (14A, 16A and 20A), the bubble would be discharged from the outlet side third liquid reservoir 28. Therefore, if it is possible to prevent air from coming in even if the dummy liquid 35 is sucked with the twisted paper string 37 from the inlet side first and second liquid reservoirs 24 and 26, this will be acceptable. Incidentally, where it is possible to inject the experimental liquid 34 by using a syringe (not shown) whose injection port can tightly fit the inlet side first and second liquid reservoirs 24 and 26, there will be no particular need for the suction step.

Next, the experimental step is carried out. Thus, as shown in Figures 6(a) and 6(b), a prescribed quantity of the experimental liquid 34 is supplied to the first liquid reservoir 24 (or the second liquid reservoir 26) with a pipette for experimental liquid 32. In this case, the minute channels (14A, 16A and 20A) are filled with the dummy liquid 35.

Then, the first liquid reservoir 24 (or the second liquid reservoir 26) is lidded with a tape 36 for sealing the experimental liquid inlet/outlet as shown in Figure 6(c). This tape 36 is coated on one face (the lower face in the drawing) with a sticky material, and this serves to keep the first liquid reservoir 24 (or the second liquid reservoir 26) off the external atmosphere.

Then, the finger tip 38 is brought into contact with the tape 36 as shown in Figure 6(d). This causes liquid feeding means to be formed in the first liquid reservoir 24 (or the second liquid reservoir 26). This liquid feeding means, as already stated, is pressure-adding type liquid feeding means which causes the volume of gas in the first liquid reservoir 24 (or the second liquid reservoir 26) to be expanded by the heat of the finger tip 38 to feed the experimental liquid 34 to the channel 14A (or 16A). Alternatively, it may be such pressure-reducing type liquid feeding means as feeds the experimental liquid 34 to the channel 14A (or 16A) by causing the finger tip 38 to bend the tape 36 downward and thereby reducing the volume of the first liquid reservoir 24 (or the second liquid reservoir 26). Further, it may as well such pressure-reducing type liquid feeding means as causes the experimental liquid 34 supplied to the inlet side first and second liquid reservoirs 24 and 26 to be sucked into the channel 14A (or 16A) by the sucking force resulting from a reduction in the pressure in the space in the third liquid reservoir 28.

Where the liquid feeding means is a pressure-adding type device, the experimental liquid 34 is so fed into the minute channels (14A, 16A and 20A) as to shove out successively the dummy liquid 35, filling the minute channels (14A, 16A and 20A) in advance, from the minute channels (14A, 16A and 20A) toward the outlet side. Or where the liquid feeding means is a pressure-reducing type device, the experimental liquid 34 is induced by the flow of the dummy liquid 35, filling the minute channels (14A, 16A and 20A) in advance, toward the outlet side and guided into the minute channels (14A, 16A and 20A) following the flow of the dummy liquid. Therefore, there is no possibility for air to find its way into the experimental liquid 34 during an experiment. This arrangement serves, when the experiment is started by feeding the experimental liquid 34 into the minute channels (14A, 16A and 20A), to eliminate the possibility for the experimental liquid to form bubbles or for bubbles to remain on the wall faces of the minute channels (14A, 16A and 20A).

Therefore, the flow of the experimental liquid 34 to be fed is not disturbed by clogging by any bubble and a constant state can be achieved, making the experiment free from failure and enabling scientific phenomena to be correctly evaluated.

In addition, though the scientific experiment material 10 is a set for having the pupils assemble the constituent parts for themselves, it can as well be sold as a finished product. It is advisable for a scientific experiment material 10 to be sold as a finished product to have their minute channels (14A, 16A and 20A) filled in advance with the inert dummy liquid 35 which does not react with the experimental liquid 34 to be used for the experiment and accordingly placed in a bubble-free state. In this case, if the three liquid reservoirs 24, 26 and 28 are also lidded with a tape or the like in a state of being filled with the dummy liquid 35, no air will find its way into them before the experiment is carried out. Then, when the experiment is to be started, the tape can be peeled off to start it from the suction step described above. This enables the scientific phenomenon evaluating apparatus according to the invention to be provided, which serves to free the experimenting persons, even if they are low-aged persons, such as elementary school students, from any risk of failing in the experiment on account the clogging of the channels with any bubble.

Incidentally, in order to facilitate observation of scientific phenomena, it is possible to use a magnifying glass, magnifying lens or the like. Or it is also possible to provide the covering plate 22 in the channel 20A part with a magnifying glass function (lens function) as already stated.

Whereas the foregoing description referred to case in which the scientific experiment material 10 has two liquid reservoirs 24 and 26 on the inlet side and one liquid reservoir 28 on the outlet side, the experimental method according to the invention is particularly effective for a scientific experiment material 10 having multiple channels.

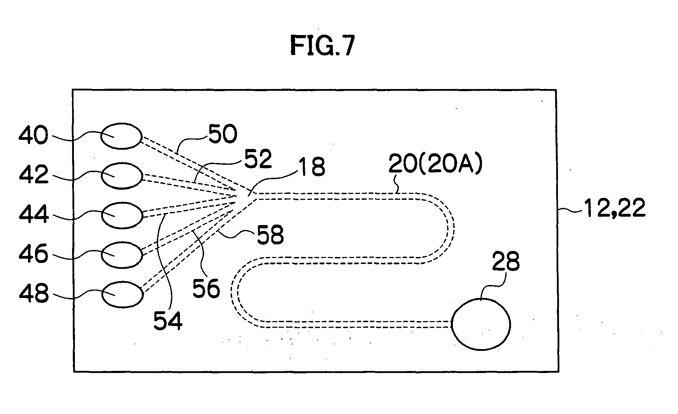

Figure 7, illustrating an example of a scientific experiment material 10 having multiple channels, shows a configuration in which channels 50, 52, 54, 56 and 58 extending from five liquid reservoirs 40, 42, 44, 46 and 48 formed on the inlet side join into a single channel 20A at the confluent point 18 to the third liquid reservoir 28. Where liquid is to be fed by a pressure reduction by the outlet side liquid reservoir 28 in such a scientific experiment material 10 having multiple channels, bubbles are more likely to be formed before the confluent point 18. This is because, when one of the multiple channels 50 through 58 is made open to the experimental liquid 34 at a reduced pressure, the resistance in the opened channel decreases and the resistance in the part of the channel where there is any bubble increases. To remove this bubble, a sufficient pressure reduction to overcome this resistance is required. Generally, the relative proportion of even a small bubble to a channel is high, and the bubble can cause disturbance of the flow of liquid. Once a minute channel is clogged with any bubble in this way, to remove this, either pressurized liquid has to be fed from the inlet side liquid reservoirs 40, 42, 44, 46 and 48 at a high flow rate or the pressure in the outlet side liquid reservoir 28 has to be reduced to obtain a high sucking force and feed the liquid under reduced pressure at a high flow rate, inviting a massive waste of the experimental liquid 34.

When the minute channels 50 through 58 and 20A are filled with the dummy liquid 35 at the preparatory step in such a multi-channel scientific experiment material 10, if any bubble remains in the channel 50 for instance, only the liquid reservoir 40 out of the five liquid reservoirs 40 through 48 and only two liquid reservoirs 40 and 20 out of the outlet side liquid reservoir 28 will be opened and the remaining four liquid reservoirs 42 through 48 will be lidded and sealed. By letting the dummy liquid 35 flow from the outlet side liquid reservoir 28 into the minute channel 20A in this state, any bubble remaining in the channel 50 can be removed without fail. Or where bubbles remain in a plurality of channels, for instance the channels 50, 54 and 58, the bubbles remaining in a plurality of channels can be removed all at once by vigorously injecting the dummy liquid 35 in a high flow rate from the outlet side liquid reservoir 28 toward a plurality of inlet side liquid reservoirs 40 through 48, with all the liquid reservoirs 40 through 48 and 28 kept open in advance. Incidentally, the operations at the suction step and the experimental step are the same no matter whether the number of channels is small or large.

In both of the apparatuses shown in Figure 1 and Figure 7, when the experimental liquid 34 having a high surface tension is let flow into the minute channels, the minute channels tend to be clogged with bubbles, and it is extremely difficult to remove the clogged bubbles. Therefore, it may be one solution to subject the wall faces in the minute channels to special treatment to improve affinity with the experimental liquid 34. However, though special treatment of the wall faces in the minute channels is technically possible, it takes much time and cost. Unlike that, the method of filling the minute channels with dummy liquid as stated above can be accomplished very simply and inexpensively, and therefore is more preferable.

The scientific experiment material 10 so far described permits maximum simplification of essential parts and cost reduction to enable pupils to enjoy scientific experiments in the microscopic world and develop their dreams, and yet provides high accuracy in experiments.

Especially where phenomena of molecular diffusion or the like, which constitute the basis of chemical reactions, are to be qualitatively observed, to improve experimental accuracy it is extremely important for a plurality of experimental liquids to flow into channels at least under the same conditions, and this requirement can be fully met. Thus, relatively accurate experiments can be carried out by very simple and inexpensive means. The quantities of chemicals, typically dyes or pigments, used for experiments in the microscopic world can be very small, resulting inn a substantial reduction in environmental load.

Although embodiments of the present invention in evaluating apparatuses for scientific phenomena, scientific experiment materials and the manufacturing methods thereof have been described, the invention is not limited to these embodiments, but can be carried out in various other modes.

Further, though the first liquid reservoir 24 and the second liquid reservoir 26 are formed in the covering plate 22 and the third liquid reservoir 28 is formed in the substrate 12 and the covering plate 22 in the foregoing embodiments, some other modes, for instance one in which all the liquid reservoirs are formed in the substrate 12 and the covering plate 22, can be adopted as well.

Also, though three sets each of channels and liquid reservoirs are provided in the foregoing embodiments, a configuration having four or more sets of them can also be adopted, or a configuration illustrated in Figure 7.

Further, the pipette for experimental liquid 32 is used for supplying the experimental liquids (reagents) to the liquid reservoirs (24, 26 and so forth), a syringe, a micro-syringe or the like having similar functions can as well be used in its place. Although it is generally desirable to use an inexpensive pipette as a scientific experiment material, for some test purposes one of the items having similar functions may prove more preferable.

Next, the form of marketing to sell the scientific experiment materials 10 will be described.

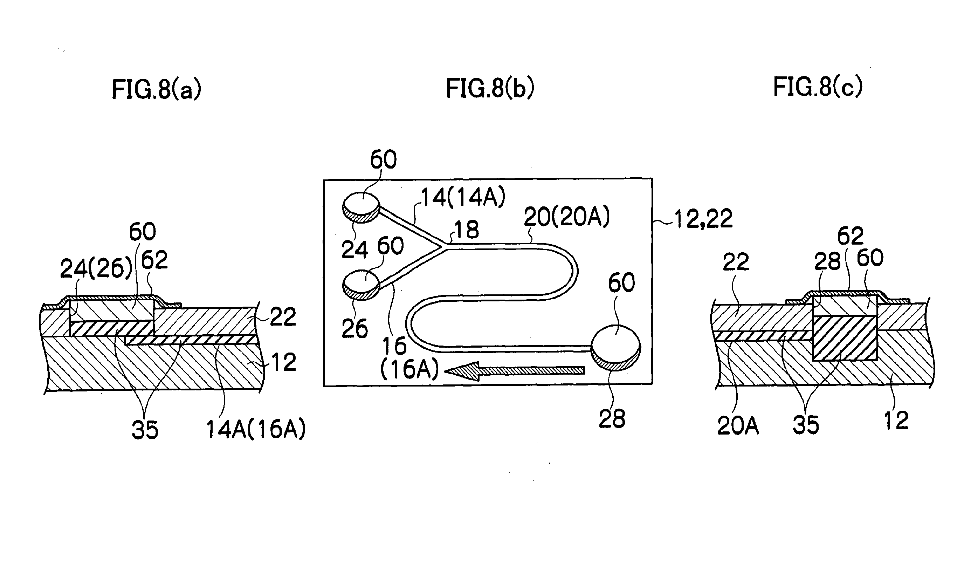

As shown in Figures 8, the scientific experiment material 10 is sold in a state in which the minute channels (14A, 16A and 20A) and the first through third liquid reservoirs (24, 26 and 28) are filled with the dummy liquid 35 containing no bubble and the ports of the first through third liquid reservoirs (24, 26 and 28) are sealed detachably with the plug 60. In this case, it is preferable for the plug 60 to be fixed with the tape 62 to the covering plate 22 to prevent, on the way of marketing, the plug 60 from coming off to let the dummy liquid 35 from leaking. In this case, it is preferable to use as the tape 62 an easy-to-peel-off tape leaving little glue behind. It is preferable to use as the plug 60 so used to be one of an elastic material, such as a rubber plug or a cork plug, so that the ports of the first through third liquid reservoirs (24, 26 and 28) can be sealed.

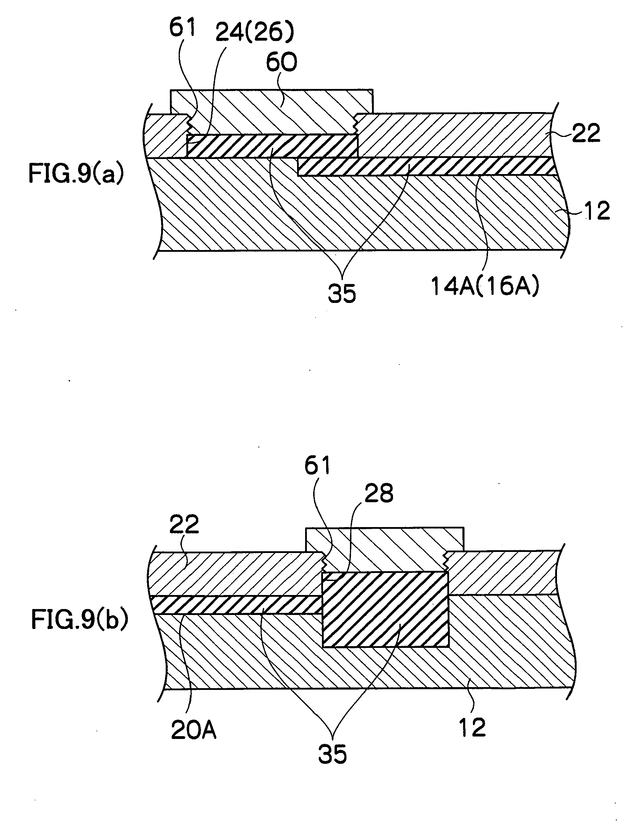

Further as shown in Figures 9, a male thread may be cut on the lower external circumference of the plug 60 and female threads cut on the internal circumferences of the ports of the first through third liquid reservoirs (24, 26 and 28) to enable the plug 60 and the ports to be fixed by a screwing structure 61. The maleness and femaleness of threads to be cut on the external circumference of the plug 60 and the internal circumferences of the ports may be reversed. Fixation by the screwing structure 61 in this way can dispense with the use of the tape 62. It is preferable for the material of the plug 60 in this case to be of the same material as the covering plate 22 to enable the threads to be cut.

Further, the whole scientific experiment material 10 may be wrapped by covering it with a shrink film and then causing the film to be shrunken by heat. The whole scientific experiment material 10 may as well be wrapped with a sealing film, such as Parafilm.

Important requirements for the dummy liquid 35 include the absence of bubbles, inertness with the experimental liquid, freedom from decaying till the point of sale to the use, and ready replaceability with the experimental liquid, and any of pure water, ethanol and a mixture of ethanol and pure water having gone through de-bubbling in advance satisfies these requirements. Incidentally, it is even more advisable to use sterilized pure water or ethanol.

Before filling the minute channels (14A, 16A and 20A) with the dummy liquid 35, it is necessary to deaerate at least once the minute channels (14A, 16A and 20A) as described with reference to the preparatory step of the experimental method according to the invention.

In this way, selling the scientific experiment material 10 in a state in which the ports of its plurality of liquid reservoirs (24, 26 and 28) are sealed detachably with the plug 60 and its channels (14A, 16A and 20A) are filled with the dummy liquid 35 relieves the experimenting person who buys it of the need to deaerate the channels (14A, 16A and 20A) in advance of the experiment. This serves to free the experimenting persons, even if they are low-aged persons, such as elementary school students, from the risk of failing in the experiment on account of the clogging of the channels (14A, 16A and 20A) with any bubble. Also, the absence of the need to deaerate the channels (14A, 16A and 20A) before the experiment frees the use of the scientific experiment material 10 from troublesome handling.

## Claims

1. An experimental method for a scientific phenomenon evaluating apparatus wherein communication is established between two or more liquid reservoirs constituting the inlet side and the outlet side by a minute channel of not more than 1 mm² in sectional area, the experimental method using the scientific phenomenon evaluating apparatus comprising:
at least one preparatory step of removing air in said minute channel in advance by letting inert dummy liquid which does not react with the experimental liquid used for the experiment flow into said minute channel and filling the channel therewith; and
an experimental step of feeding the minute channel with said experimental liquid by supplying the experimental liquid to said inlet side liquid reservoirs and causing liquid feeding device to let the dummy liquid filling said minute channel flow to the outlet side liquid reservoirs.

2. An experimental method for a scientific phenomenon evaluating apparatus wherein communication is established between two or more liquid reservoirs constituting the inlet side and the outlet side by a minute channel of not more than 1 mm² in sectional area, the experimental method using the scientific phenomenon evaluating apparatus comprising:
at least one preparatory step of removing air in said minute channel in advance by letting an experimental liquid to be used for the experiment flow into said minute channel and filling the channel therewith; and
an experimental step of feeding the minute channel with said supplied experimental liquid by further supplying the experimental liquid to said inlet side liquid reservoirs and causing transfer device to let the experimental liquid flow filling said minute channel to the outlet side liquid reservoirs.

3. The experimental method for scientific phenomenon evaluating apparatus according to Claim 1 or 2, further comprising: a sucking step of reducing the liquid level in the inlet side liquid reservoirs by sucking the liquid in the outlet side liquid reservoirs with a tapered sucking tool between said preparatory step and said experimental step.

4. A scientific phenomenon evaluating apparatus, comprising:
a substrate having long grooves of a sectional area of not more than 1 mm² formed in the surface of a planar body; and
a covering plate which is arranged in tight contact with the surface of the substrate and forms minute channels in the substrate by covering said long grooves,
**characterized in that**:
one end of each of a plurality of said channels joins with those of other channels at one confluent point, the other end of each of the plurality of said channels communicates with liquid reservoirs each having a capacity of 5 to 5000 mm³.
a scientific phenomenon in said channels is made visually recognizable, and the plurality of said channels are filled with inert dummy liquid which does not react with the experimental liquid used for the experiment in a state of being free from bubbles.

5. A scientific phenomenon evaluating apparatus, comprising:
a substrate having long grooves of a sectional area of not more than 1 mm² formed in the surface of a planar body; and
a covering plate which is arranged in tight contact with the surface of the substrate and forms minute channels in the substrate by covering said long grooves,
**characterized in that**:
one end of each of a first channel and a second channel which are two of said channels of substantially the same length joins with the other at one confluent point,
the other end of said first channel communicates with a first liquid reservoir having a capacity of 5 to 5000 mm³,
the other end of said second channel communicates with a second liquid reservoir having a capacity of 5 to 5000 mm³,
one end of a third channel which is one of said channels communicates with said confluent point and the other end of the third channel communicates with a third liquid reservoir having a capacity of 5 to 5000 mm³,
a scientific phenomenon in said channels is made visually recognizable, and the plurality of said channels are filled with inert dummy liquid which does not react with the experimental liquid used for the experiment in a state of being free from bubbles.

6. The scientific phenomenon evaluating apparatus according to Claim 4 or 5, **characterized in that** it is sold in a state in which the ports of said plurality of liquid reservoirs are sealed with detachable plugs and said channels are filled with said dummy liquid.

7. The scientific phenomenon evaluating apparatus according to Claim 6, **characterized in that** said plugs are fixed to said covering plate with tapes.

8. The scientific phenomenon evaluating apparatus according to Claim 6, **characterized in that** said plugs and the ports of said liquid reservoirs are fixed to each other by screwing structures.

9. The scientific phenomenon evaluating apparatus according to any of Claims 6 through 8, **characterized in that** said dummy liquid is any of pure water, ethanol and a mixture of ethanol and pure water having gone through de-bubbling in advance.
